(19) Europäisches Patentamt

European Patent Office

Office européen des brevets

(11) **EP 1 326 483 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(51) Int Cl.⁷: **H05B 41/00**

(21) Anmeldenummer: **02028520.1**

(22) Anmeldetag: **19.12.2002**

(54) **Betriebsgerät und Betriebsverfahren für Hochdruck-Entladungslampen**

Operating device and method for high pressure discharge lamps

Dispositif et procedé d'operation pour une lampe à décharge à haute pression

(84) Benannte Vertragsstaaten:
**AT BE BG CH CY CZ DE DK EE ES FI FR GB GR IE IT LI LU MC NL PT SE SI SK TR**

(30) Priorität: **02.01.2002 DE 10200046**

(43) Veröffentlichungstag der Anmeldung:
**09.07.2003 Patentblatt 2003/28**

(73) Patentinhaber: **Patent-Treuhand-Gesellschaft für elektrische Glühlampen mbH
81543 München (DE)**

(72) Erfinder:
- **Huber, Andreas
  82216 Maisach (DE)**
- **Reiter, Bernhard
  81541 München (DE)**

(56) Entgegenhaltungen:
**EP-A- 0 241 279     EP-A- 1 148 768
US-A- 5 072 160**

## Beschreibung

### Technisches Gebiet

Die Erfindung geht aus von einem Betriebsgerät für Hochdruck-Entladungslampen gemäß dem Oberbegriff des Anspruchs 1. Es handelt sich dabei insbesondere um eine Einrichtung und ein Verfahren zur Regelung eines Betriebsgeräts für Hochdruck-Entladungslampen, die in regelmäßigen Abständen umgepolt werden. Besonderes Augenmerk liegt dabei auf der Größe von Überschwingungen, die durch den Umpolvorgang ausgelöst werden. Da in der Literatur auch der Begriff Höchstdruck-Entladungslampe zu finden ist, sei ausdrücklich erwähnt, dass im folgenden unter Hochdruck-Entladungslampen auch Höchstdruck-Entladungslampen und dgl. verstanden werden.

### Stand der Technik

Allgemein verbreitet bei elektronischen Betriebsgeräten für Hochdruck-Entladungslampen (im folgenden auch Lampe genannt) ist der sog. Rechteckbetrieb. Dabei wird die Lampe mit einem Gleichstrom beaufschlagt, der in regelmäßigen Abständen umgepolt wird. Das Umpolen ist nötig, um Elektrophorese-Effekte zu vermeiden und um jede Elektrode der Lampe gleich zu belasten.

Der Gleichstrom wird im allgemeinen von einer getakteten Stromversorgung bereitgestellt. Dabei handelt es sich meist um bekannte Topologien wie Tiefsetzer (Buck), Hochsetzer (Boost), Inverswandler (Buck-Boost), Cük- oder Sepic-Wandler. Meist ist die Spannung, die der getakteten Stromversorgung zugeführt wird, höher als die Spannung an der Lampe, weshalb bevorzugt ein Tiefsetzer eingesetzt wird. Die Leistung, die die getaktete Stromversorgung einer Last bereitstellt kann im allgemeinen durch das Tastverhältnis oder die Schaltfrequenz von elektronischen Schaltern, die in der getakteten Stromversorgung enthalten sind, eingestellt werden. Dazu besitzt die getaktete Stromversorgung einen Stelleingang an dem eine Stellgröße eingespeist wird. Falls es sich bei der getakteten Stromversorgung z. B. um einen Tiefsetzer handelt, so wird meist ein Pulsweitenmodulator (PWM) verwendet, der die Stellgröße in ein Ansteuersignal für den im Tiefsetzer enthaltenen elektronischen Schalter umsetzt.

In der Schrift EP 1 148 768 (Huber) wird eine Regelung für ein in Rede stehendes Betriebsgerät beschrieben.

Ziel einer Regelung ist es, die Lampenleistung konstant zu halten. Dazu wird abhängig von der Lampenspannung eine Sollgröße in Form eines Stromsollwerts gebildet. Dieser Stromsollwert wird in einer Regeleinrichtung, die im wesentlichen einen Regelverstärker und einen Addierer enthält, mit einer Regelgröße verglichen.

Die Regelgröße wird von einer Messeinrichtung bereitgestellt und ist ein Maß für den Strom, den die getaktete Stromversorgung abgibt. Meist kann dieser Strom einem Drosselstrom einer in der getakteten Stromversorgung enthaltenen Drossel gleichgesetzt werden. Die Messeinrichtung wird bevorzugt mit Hilfe eines Strommesswiderstandes realisiert, der vom Strom durchflossen wird, den die getaktete Stromversorgung abgibt. Die Regeleinrichtung stellt eine Stellgröße bereit, die dem Stelleingang der getakteten Stromversorgung zugeführt wird. Damit wird der hochfrequente Drosselstrom (> 20kHz) der in der getakteten Stromversorgung enthaltenen Drossel geregelt. Allgemein bekannt sind dafür zwei Methoden: Vorgabe des Spitzenstroms durch die Drossel (Peak Current Mode) oder Vorgabe des mittleren Stroms durch die Drossel (Average Current Mode). Bevorzugt wird bislang der Peak Current Mode, da er den geringeren schaltungstechnischen Aufwand benötigt und inhärent eine Begrenzung des Drosselstroms gegeben ist. Um einen Gleichstrom liefern zu können, dem möglichst wenig Wechselstrom überlagert ist, ist der getakteten Stromversorgung ein Filternetzwerk nachgeschaltet, das im allgemeinen aus einem LC-Tiefpass besteht, der eine Filterdrossel und einen Filterkondensator enthält.

Zur Umpolung ist zwischen die getaktete Stromversorgung und die Lampe ein Umpolnetzwerk geschaltet. Dieses besitzt einen Umpolsignaleingang, an dem ein Umpolsignal eingespeist wird. Damit kann von einer Steuereinrichtung ein Umpolen der Lampenspannung mittels des Umpolsignals bewirkt werden. Meist wird das Umpolnetzwerk durch eine Vollbrücke realisiert, die vier Halbleiterschalter mit dazugehöriger Ansteuereinrichtung enthält.

Zur Zündung der Lampe wird zwischen der getakteten Stromversorgung und die Lampe ein Zündtransformator geschaltet, der vor dem Betrieb der Lampe eine Zündspannung bereitstellt. Häufig ist auch noch ein Resonanznetzwerk, bestehend aus einem LC-Schwingkreis, zwischen die getaktete Stromversorgung und den Zündtransformator geschaltet, um die erreichbare Zündspannung zu erhöhen.

Der beschriebene Aufbau eines in Rede stehenden Betriebsgeräts birgt folgendes Problem: Zwischen der getakteten Stromversorgung und der Lampe sind Energiespeicher geschaltet (Zündtransformator, Resonanznetzwerk, Filternetzwerk), die zusammen ein Reaktanznetzwerk bilden. Das Reaktanznetzwerk bildet zusammen mit der Lampe einen Lastkreis, der bei jedem Umpolvorgang zu Schwingungen angeregt wird. Insbesondere bei der Anwendung in Projektionsgeräten wird ein konstanter Lichtstrom benötigt. Der Umpolvorgang muss deshalb einerseits möglichst schnell durchgeführt werden, andererseits sind Überschwingungen des Lampenstroms und damit des Lichtstroms beim Umpolen möglichst gering zu halten. Die im Stand der Technik beschriebene Regelstruktur erzeugt Überschwingungen, die bei Projektionsanwendungen störend sind.

## Darstellung der Erfindung

Es ist Aufgabe der vorliegenden Erfindung, ein Betriebsgerät zum Betrieb von Hochdruck-Entladungslampen gemäß dem Oberbegriff des Anspruchs 1 bzw. ein Verfahren zum Betrieb von Hochdruck-Entladungslampen gemäß dem Oberbegriff des Anspruchs 11 bereitzustellen, das eine Umpolung des Lampenstroms mit im Vergleich zum Stand der Technik reduziertem Überschwingen bewerkstelligt.

Diese Aufgabe wird durch ein Betriebsgerät bzw. Betriebsverfahren zum Betrieb von Hochdruck-Entladungslampen mit den Merkmalen des Oberbegriffs des Anspruchs 1 bzw. 11 durch die Merkmale des kennzeichnenden Teils des Anspruchs 1 bzw. 11 gelöst. Besonders vorteilhafte Ausgestaltungen finden sich in den abhängigen Ansprüchen.

Üblicherweise ist die Sollgröße vom Anwender eines Systems vorgegeben und ändert sich nicht, solange der Anwender keine veränderten Anforderungen an das System stellt. Eine gleichbleibende Lampenspannung vorausgesetzt, ist im Stand der Technik gleichermaßen die Sollgröße für den Lampenstrom vorgegeben und konstant. Die angegebene Voraussetzung trifft in der Regel zu, da sich die Lampenspannung während des Betriebs im Vergleich zu Zeitintervallen zwischen Umpolungen nur sehr langsam ändert.

Erfindungsgemäß wird die Sollgröße synchron zur Umpolung und damit synchron zum Umschaltsignal um einen Absenkwert mit zeitlichem Verlauf abgesenkt. Die Intention dieser Absenkung ist es, in den Energiespeichern des o. g. Reaktanznetzwerks eine Schwingung anzuregen, die dem, durch die Umpolung hervorgerufenen Überschwingen entgegenwirkt. Im Idealfall wird das Überschwingen erfindungsgemäß exakt kompensiert. Folgt die Stellgröße der Sollgröße, bedingt z. B. durch einen im wesentlichen integrierend arbeitenden Regelverstärker, nur sehr langsam, z. B. in einem Zeitbereich der länger als eine Mikrosekunde dauert, so wird vorteilhaft nicht die Sollgröße, sondern direkt die Stellgröße abgesenkt. Demgemäss gelten die folgenden Ausführungen sinngemäß auch für eine Absenkung der Stellgröße.

Da vom Beginn der Absenkung bis zu einer Reaktion im Reaktanznetzwerk mindestens eine Mikrosekunde verstreicht, ist es vorteilhaft, dass die Absenkung bereits einsetzt, bevor die Steuereinrichtung das Umpolsignal ausgibt. Praktische Versuche haben gezeigt, dass es vorteilhaft ist, die Absenkung mindestens 1 Mikrosekunde vor der Ausgabe des Umpolsignal zu beginnen.

Die optimale Dauer, Form und Amplitude des zeitlichen Verlaufs der Absenkung ist abhängig von den Eigenschaften des Lastkreises, insbesondere von dessen Sprungantwort. Unter Sprungantwort soll hier die aus der Systemtheorie bekannte Reaktion eines Netzwerks auf eine sprungförmige Änderung einer Eingangsgröße verstanden werden. Allgemein definiert ist dazu eine Sprungfunktion $\sigma(t)$, die vor einer Zeit $t=0$ den Wert 0 annimmt und bei der Zeit $t=0$ auf den Wert 1 springt und beibehält. Bei den in Rede stehenden Betriebsgeräten stellt die Umpolung eine sprungförmige Änderung einer Eingangsspannung des Lastkreises dar, der mit seiner Sprungantwort reagiert. Die Überschwingungen, dieser Sprungantwort werden erfindungsgemäß durch das Absenken der Sollgröße kompensiert.

Versuche haben gezeigt, dass für eine erfindungsgemäße Wirkung die Absenkung mindesten bis 10 Mikrosekunden nach dem Umpolen andauern muss.

Weiterhin hat sich gezeigt, dass für eine erfindungsgemäße Wirkung die Absenkung schnell einsetzen und langsam ausklingen soll. Bei einem pulsförmigen zeitlichen Verlauf der Absenkung bedeutet dies, dass die Fallzeit des Pulses mindestens den dreifachen Wert der Anstiegszeit des Pulses aufweist. Zur Klärung von Vorzeichen gelte folgender Zusammenhang: Ein positiver Wert für die Absenkung führt zu einer Reduzierung des Sollwerts.

Weiterhin hat sich gezeigt, dass es vorteilhaft bezüglich der Aufgabenstellung der Erfindung ist, dass die Absenkung für eine Verweilzeit konstant ihren Maximalwert hält.

Die in den Energiespeichern des Reaktanznetzwerks gespeicherte Energiemenge hat Einfluss auf die Sprungantwort des Lastkreises. Deshalb wird erfindungsgemäß die Amplitude der Absenkung an die gespeicherte Energiemenge in den Energiespeichern des Reaktanznetzwerks angepasst. Dies geschieht erfindungsgemäß dadurch, dass der Maximalwert der Absenkung in Abhängigkeit einer Lampenbetriebsgröße gewählt wird. Beispielsweise ist der Strom durch die Lampe (Lampenstrom) ein Maß für die induktiv im Reaktanznetzwerks gespeicherte Energie. Bei gegebener Lampenleistung kann anstatt des Lampenstroms auch die Lampenspannung erfasst werden.

Es hat sich gezeigt, dass die erfindungsgemäße Kompensation von Überschwingungen, insbesondere des Lampenstroms, dann optimal ist, wenn der, während der Absenkung erreichte Minimalwert der Sollgröße immer gleich ist. Da die Sollgröße ohne Absenkung unterschiedliche Werte annehmen kann richtet sich die Amplitude der Absenkung demnach nach der Differenz zwischen nicht abgesenktem Sollwert und dem konstanten Minimalwert der Sollgröße.

Wie oben ausgeführt, ist der optimale zeitliche Verlauf des Werts der Absenkung (Absenkwert (t)) abhängig von einer Sprungantwort des Lastkreises. Es hat sich gezeigt, dass der Lastkreis im einfachsten Fall durch die Serienschaltung einer äquivalenten Induktivität und eines äquivalenten Widerstandes modelliert werden kann. Näherungsweise kann die äquivalente Induktivität durch die Summe der im Reaktanznetzwerk enthaltenen Induktivitäten beschrieben werden. Der äquivalente Widerstand entspricht dem Verhältnis aus Lampenspannung und Lampenstrom im jeweiligen Arbeitspunkt der Lampe. Im vereinfachten Modell folgt nun der Absenkwert idealerweise folgender Gesetzmäßigkeit:

$$Absenkwert\ (t) = \sigma(t)Ae^{-t/\tau}$$

wobei $\sigma(t)$ die Einheitssprungfunktion beschreibt, A einen Maximalwert der Absenkung vorgibt und die Zeitkonstante $\tau$ das Verhältnis von äquivalenter Lastinduktivität zu äquivalentem Lastwiderstand angibt. In der Praxis kann der Absenkwert nicht exakt der o. g. Gesetzmäßigkeit folgen. Bei der Zeit t=0 müsste der Absenkwert unendlich schnell auf einen Startwert ansteigen. Auch müsste der Absenkwert für unendlich lange Zeit wirken. Beides ist nicht realisierbar. Es genügt also, wenn der Absenkwert im wesentlichen der o. g. Gesetzmäßigkeit folgt; d. h. eine endliche Anstiegszeit besitzt und nach endlicher Zeit auf den Wert Null absinkt.

Wie oben beschrieben wird für die getaktete Stromversorgung bevorzugt ein allgemein bekannter Tiefsetzer verwendet. Es hat sich herausgestellt, in dass die in Rede stehenden Überschwingungen besonders gering werden, wenn der Tiefsetzer im sog. Average Current Mode betrieben wird. Dieser ist z. B. in L. H. Dixon, "Average Current Mode Control of Switching Power Supplies", Unitrode Power Supply Seminar Manual, 1990 beschrieben.

Vorteilhaft hat sich der Einsatz von Microcontrollern bei der Realisierung der erfindungsgemäßen Betriebgeräte erwiesen. Sowohl die Regel- als auch die Steuereinrichtung lässt sich mit Hilfe eines Microcontrollers aufbauen. Besonders vorteilhaft ist dabei, dass sich empirisch ermittelte Werte, wie z.B. die Abhängigkeit der Verweilzeit und der Zeitkonstante $\tau$ vom Lampenstrom, in Form von Tabellen im Microcontroller ablegen lassen. Die Tabellenwerte werden während des Betriebs der Lampe ausgelesen und somit die Überschwingungen des Lampenstroms und damit des Lichtstroms laufend optimiert.

Es ist auch möglich, die empirisch gewonnen Zusammenhänge nicht in Tabellen abzulegen, sondern eine mathematische Approximation, wie z. B. einen Polynomapproximation, vorzunehmen. Damit kann der Microcontroller beispielsweise die Verweilzeit und die Zeitkonstante $\tau$ in Abhängigkeit von einem gemessenen Lampenstrom berechnen. Damit können problemlos Zwischenwerte eingestellt werden, die in einer Tabelle nicht erfasst sind. Zudem können die Eigenschaften des Betriebsgeräts durch die Programmierung von wenigen, aus der mathematischen Approximation gewonnenen Parametern, eingestellt werden.

Auch ein erfindungsgemäßes Verfahren kann durch einen Microcontroller gesteuert werden. Dazu senkt der Microcontroller zunächst den gegebenen Sollwert um einen abgespeicherten Maximalwert der Absenkung ab. Nach einer programmierbaren Zeit gibt er das Signal zum Umpolen. Nach der Verweilzeit halbiert der Microcontroller den Absenkwert mehrmals in einem vorgegebenen Halbierungszeitakt. Dadurch kann die o. g. gesetzmäßige Exponentialfunktion nachgebildet werden. Der Halbierungszeitakt repräsentiert dabei die Zeitkonstante $\tau$. Spätestens wenn die Absenkung durch die fortlaufende Halbierung einen Wert erreicht hat, der kleiner ist als ein Auflösevermögen des Microcontrollers ist der Absenkvorgang abgeschlossen und wiederholt sich beim darauffolgenden Umpolen.

Das erfindungsgemäße Reduzieren von Überschwingungen wirkt sich auch vorteilhaft auf die Generierung akustischer Schwingungen der Bauteile des Betriebsgeräts aus. Erfindungsgemäße Betriebsgeräte senden deutlich weniger Störgeräusche aus als Betriebsgeräte nach dem Stand der Technik.

**Beschreibung der Zeichnungen**

Im folgenden soll die Erfindung anhand von Ausführungsbeispielen näher erläutert werden. Es zeigen:

Figur 1 den zeitlichen Verlauf eines Lampenstroms IL, relativen Lichtstroms $\Delta\Phi$ und Sollwerts Is nach dem Stand der Technik,

Figur 2 den erfindungsgemäßen zeitlichen Verlauf eines Lampenstroms IL, relativen Lichtstroms $\Delta\Phi$ und Sollwerts Is für einen niedrigen nicht abgesenkten Sollwert,

Figur 3 den erfindungsgemäßen zeitlichen Verlauf eines Lampenstroms IL, relativen Lichtstroms $\Delta\Phi$ und Sollwerts Is für einen hohen nicht abgesenkten Sollwert,

Figur 4 ein Blockdiagramm eines Ausführungsbeispiels eines erfindungsgemäßen Betriebsgeräts,

Figur 5 den erfindungsgemäßen zeitlichen Verlauf des Sollwerts Is, wie er von einem Microcontroller erzeugt wird,

Figur 6 eine beispielhafte graphische Darstellung für eine empirisch ermittelte Abhängigkeit einer optimalen Verweilzeit und eines optimalen Halbierungstakts vom Lampenstrom.

Im folgenden werden Widerstände durch den Buchstaben R, Transistoren durch den Buchstaben T, Dioden durch den Buchstaben D, Verbindungsklemmen durch den Buchstaben J, Induktivitäten durch den Buchstaben L und Kapazitäten durch den Buchstaben C jeweils gefolgt von einer Zahl bezeichnet.

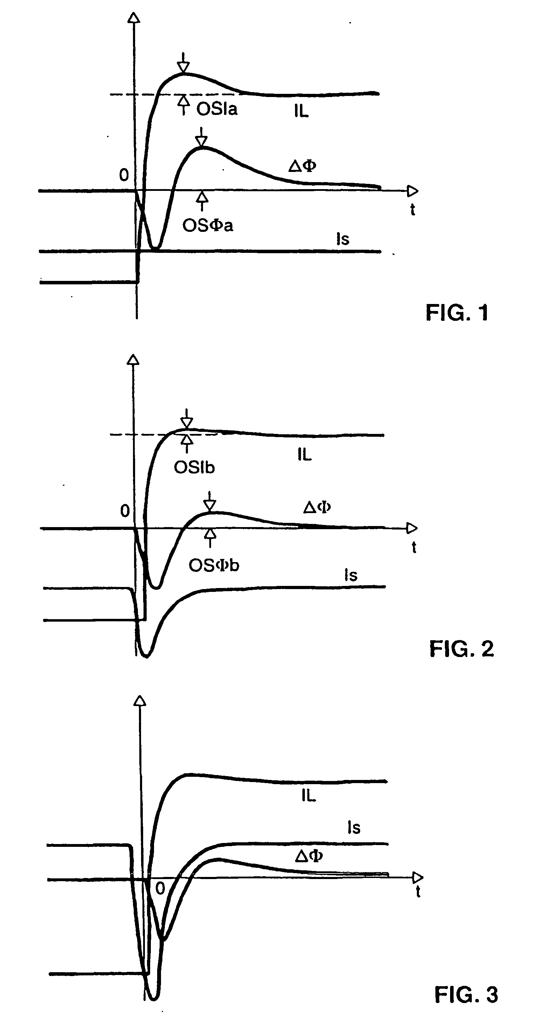

In Figur 1 ist der zeitliche Verlauf eines Lampenstroms IL, eines relativen Lichtstroms $\Delta\Phi$ und eines Sollwerts Is nach dem Stand der Technik dargestellt.

Zum Zeitpunkt t=0 polt das Umpolnetzwerk um. Der Lampenstrom IL steigt von einem negativen Schulterwert beginnend an, bildet eine Überschwingung der Höhe OSIa und schmiegt sich einem positiven Schulterwert an. Die Kurve ΔΦ zeigt den Verlauf des Lichtstroms bezogen auf einen Solllichtstrom. Im Umpolzeitpunkt t=0 fällt der Lichtstrom zunächst ab, steigt dann aber über den Solllichtstrom und bildet die Überschwingung OSΦa, die sich insbesondere in Projektionsanwendungen störend auswirkt. Der Sollwert Is ist während des Umpolvorgangs konstant. Die Bezugslinie für Is ist nicht die eingezeichnete Zeitachse t sondern eine Linie, die weit unterhalb des Darstellbereichs der Figur 1 liegt. Da im wesentlichen die Änderungen von Is für die Erfindung wichtig sind, wurde ein Maßstab gewählt, bei dem diese deutlich zu sehen sind. Dabei verschwindet jedoch die Bezugslinie in den nicht dargestellten Bereich. Ein Umpolen in die negative Richtung verläuft mit entsprechenden Überschwingungen in die negative Richtung.

In Figur 2 ist der zeitliche Verlauf der gleichen Größen wie in Figur 1 dargestellt. Erfindungsgemäß wird der Sollwert Is vor dem Umpolen abgesenkt. Sehr schnell wird der maximale Absenkwert und damit der minimale Sollwert erreicht. Danach fällt der Absenkwert nach dem o. g. Exponentialgesetz. Entsprechend steigt der Sollwert Is nach dem Minimum wieder auf den Ausgangswert an, den er vor der Absenkung aufwies. Um die gewünschte erfindungsgemäße Wirkung zu erreichen ist eine Absenkung des Sollwerts Is beim Minimum um mindestens 10% zu wählen. Deutlich ist die erfindungsgemäße Auswirkung der Absenkung beim Lampenstrom IL und beim relativen Lichtstroms ΔΦ zu erkennen. Die Überschwingungen OSIb und OSΦb fallen deutlich geringer aus als die Überschwingungen OSIa und OSΦa beim Stand der Technik in Figur 1. Dies wird erreicht, ohne Einbußen bei der Geschwindigkeit mit der sich der positive Schulterwert nach dem Umpolen einstellt. Auch der Lichtstrom erreicht seinen gewünschten Wert ohne eine Verzögerung gegenüber dem Stand der Technik. Ein Umpolen in die negative Richtung verläuft mit entsprechenden Überschwingungen in die negative Richtung. Der Verlauf des Sollwerts Is ist unabhängig von der Umpolrichtung, da schaltungstechnisch das Umpolnetzwerk der getakteten Stromversorgung nachgeschaltet ist. D. h. die Absenkung des Sollwerts beim Umpolen von positiven Lampenstromwerten auf negative Lampenstromwerte hat den gleichen Verlauf wie beim Umpolen von negativen auf positive Werte.

In Figur 3 ist wie in Figur 2 der zeitliche Verlauf des Lampenstroms IL, des relativen Lichtstroms ΔΦ und des Sollwerts Is dargestellt. Die Kurven gelten für das gleiche Reaktanznetzwerk wie in Figur 2. Aufgrund einer niedrigeren Lampenspannung ist der Sollwert Is für den Lampenstrom angehoben. Es hat sich gezeigt, dass für ein gegebenes Reaktanznetzwerk der Minimalwert des Sollwerts Is bei maximaler Absenkung vorzugsweise gleich bleibt, um die gleiche erfindungsgemäße Wirkung zu erreichen. Die Überschwingungen von IL und ΔΦ fallen in Figur 3 erfindungsgemäß genauso gering aus wie in Figur 2.

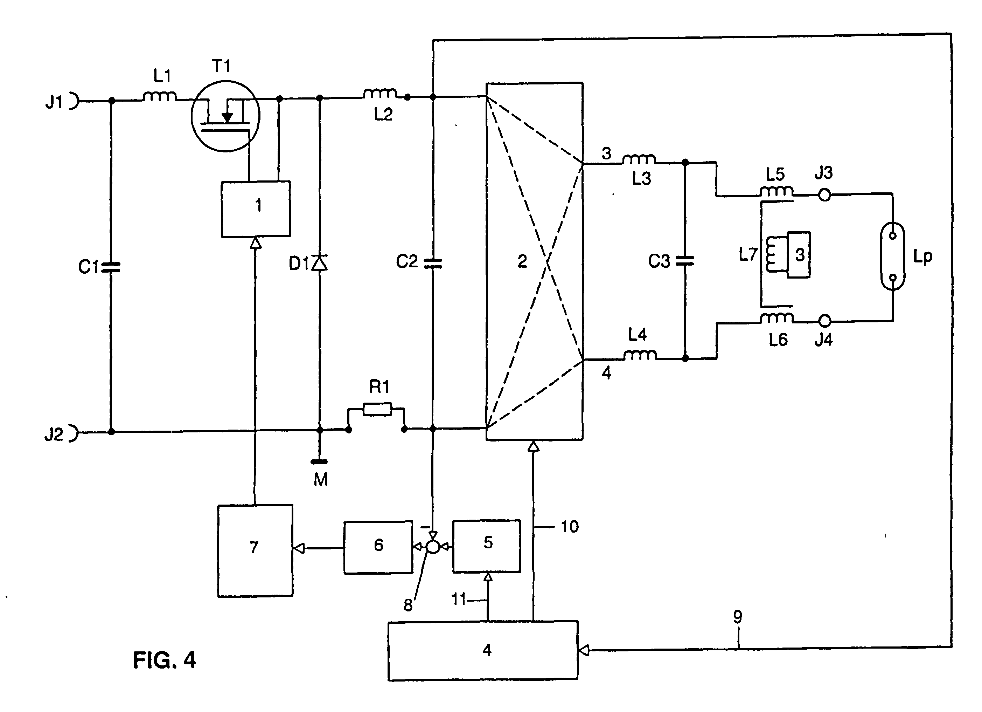

In Figur 4 ist ein Blockdiagramm eines Ausführungsbeispiels eines erfindungsgemäßen Betriebsgeräts dargestellt. Über die Klemmen J 1 und J2 wird dem Betriebsgerät eine Gleichspannung zugeführt, wobei J2 auf einem Massepotenzial M liegt. Um eine hochfrequente Belastung der zugeführten Gleichspannung zu vermeiden, ist zwischen J1 und J2 der Kondensator C1 geschaltet.

Zwischen J1 und J2 ist die Serienschaltung einer Induktivität L1, eines Transistors T1 und einer Diode D1 geschaltet. Bei L1 handelt es sich um eine Entstördrossel mit vergleichsweise geringer Induktivität. Parallel zu D1, die mit Ihrer Anode mit dem Massepotenzial M verbunden ist, ist ein Filternetzwerk bestehend aus der Serienschaltung einer Filterdrossel L2 und einem Filterkondensator C2 geschaltet. L2, T1 und D1 bilden zusammen mit einer Treiberschaltung 1 zur Ansteuerung von T1 einen allgemein bekannten Tiefsetzer. An C2, liegt die Ausgangsspannung des Tiefsetzers an. C2 ist über einen Messwiderstand R1 mit dem Massepotenzial M verbunden.

Über R1 fließt der Strom, den die getaktete Stromversorgung liefert. Somit ist der Spannungsabfall an R1 ein Maß für den Strom, den die getaktete Stromversorgung liefert und damit indirekt ein Maß für den Lampenstrom und bildet die Regelgröße.

Die Ausgangsspannung des Tiefsetzers wird in das Umpolnetzwerk 2 eingespeist. Gestrichelt sind darin die möglichen Verbindungen gezeichnet, die beispielsweise durch Halbleiterschalter geschaltet werden können. Die Punkte 3 und 4 bilden den Ausgang des Umpolnetzwerks 2 und sind jeweils über eine Induktivität L3, L4 und eine Sekundärwicklung eines Zündtransformators L5, L6 mit den Lampenanschlussklemmen J3, J4 verbunden, an denen eine Lampe Lp anschließbar ist. Die dem Umschaltnetzwerk abgewandten Seiten von L3 und L4 sind über einen Kondensator C3 verbunden. L3, L4 und C3 bilden ein Resonanznetzwerk, das die Zündung der Lampe unterstützt, indem es an C3 eine Spannungsüberhöhung bezüglich der Spannung am Ausgang des Umpolnetzwerks erzeugt. L3 und L4 können auch miteinander gekoppelt sein.

Der Zündtransformator besitzt zusätzlich zu den Sekundarwicklungen L5 und L6 eine Primärwicklung L7, an der ein Zündsteuergerät 3 angeschlossen ist. Dieses erzeugt über den Zündtransformator eine Spannung an der Lampe Lp vor dem Betrieb der Lampe, die geeignet ist, um die Lampe zu zünden. Zum Betrieb der Lampe nach der Zündung sind die Induktivitäten L3, L4, L5 und L6 nicht nötig, sie bilden aber zusammen mit L2, C2 und C3 ein Reaktanznetzwerk, das ein Überschwingen beim Umpolen wesentlich beeinflusst.

Das Betriebsgerät besitzt eine Einrichtung 5, im folgenden Sollwertgeber genannt, die eine Sollgröße in Form eines Stromsollwerts ausgibt. Der Stromsollwert wird in einen Addierer 8 eingespeist. Der Spannungsabfall an R1, der die Regelgröße darstellt, wird invertiert dem Addierer 8 zugeführt. Das Additionsergebnis des Addierers 8 wird einem Regelverstärker 6 zugeführt. Der Regelverstärker 6 weist im allgemeinen eine PI Charakteristik auf, wie sie der oben genannten Literaturstelle (Dixon) entnommen werden kann. Der Ausgang des Regelverstärkers stellt eine Stellgröße dar, die über einen Pulsweiten-Modulator 7 einem Stelleingang der getakteten Stromversorgung zugeführt wird. Der Stelleingang ist der Eingang der Treiberschaltung 1, die den Transistor T1 ansteuert.

Der Regelverstärker 6 bildet zusammen mit dem Addierer eine Regeleinrichtung.

Erfindungsgemäß enthält das Betriebgerät eine Steuereinrichtung 4, die einen Absenkwert generiert und über eine Verbindung 11 in den Sollwertgeber 5 einspeist. Da die Steuereinrichtung 4 über eine Verbindung 10 die Umpolung steuert, kann über die Verbindung 11 im Sollwertgeber 5 der Sollwert synchron zur Umpolung abgesenkt werden. Die Absenkung des Sollwerts im Sollwertgeber 5 kann beispielsweise durch eine Subtrahiererschaltung realisiert werden, die den Absenkwert von einem fest vorgegebenen Vorgabesollwert subtrahiert.

Gleichwirkend kann der Absenkwert von der Steuereinrichtung 4 auch in invertierter Form dem Addierer 8 zugeführt werden.

Über die Verbindung 9 erhält die Steuereinrichtung 4 Information über die Brennspannung der Lampe. Abhängig von der Brennspannung wählt die Steuereinrichtung 4 erfindungsgemäß die Amplitude der Absenkung mit Hilfe einer in der Steuereinrichtung 4 abgelegten Kennlinie, die in Form einer Tabelle abgespeichert werden kann. Wie bereits aus dem Stand der Technik bekannt ist, wird anhand der Information über die Lampenspannung der konstante Wert der Sollgröße zwischen den Umpolungen auch über die Verbindung 11 modifiziert. Dort findet aber keine erfindungsgemäße Absenkung des Sollwerts während der Umpolung statt.

Die Einrichtung 5 zum Bereitstellen einer Sollgröße, der Regelverstärker 6 der Addierer 8, der Pulsweitenmodulator 7 und die Steuereinrichtung 4 können durch einen Microcontroller realisiert werden.

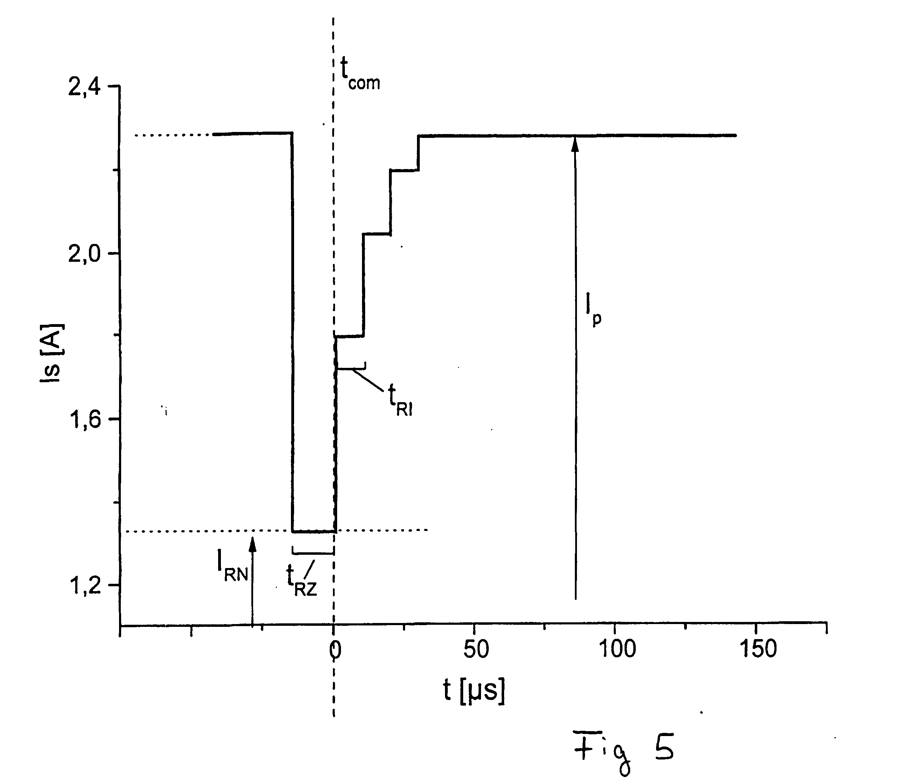

In Figur 5 ist beispielhaft der erfindungsgemäße zeitlichen Verlauf des Sollwerts Is, wie er von einem Microcontroller erzeugt wird, dargestellt. Vor dem Umpolen senkt der Microcontroller den Sollwert Is in einem Schritt von einem nominalen Sollwert Ip, der bei ca. 2,3 A liegt, um einen maximalen Absenkwert auf einen minimalen Sollwert IRN von ca. 1,3 A. Der maximale Absenkwert wird für eine Verweilzeit tRZ von ca. 25 μs beibehalten. Nach der Verweilzeit tRZ ist der Umpolzeitpunkt tcom erreicht, bei der der Microcontroller ein Umpolen der Lampenspannung veranlasst. Anschließend halbiert der Microcontroller den Absenkwert. In Zeitschritten, die von einem Halbierungszeittakt tRI vorgegeben werden, halbiert der Microcontroller den Absenkwert mehrmals. Nach dem dritten Halbierungszeittakt tRI stellt der Microcontroller wieder den nominalen Sollwert Ip ein. Um die Verweilzeit tRZ vor der nächsten Umpolung beginnt der Vorgang erneut.

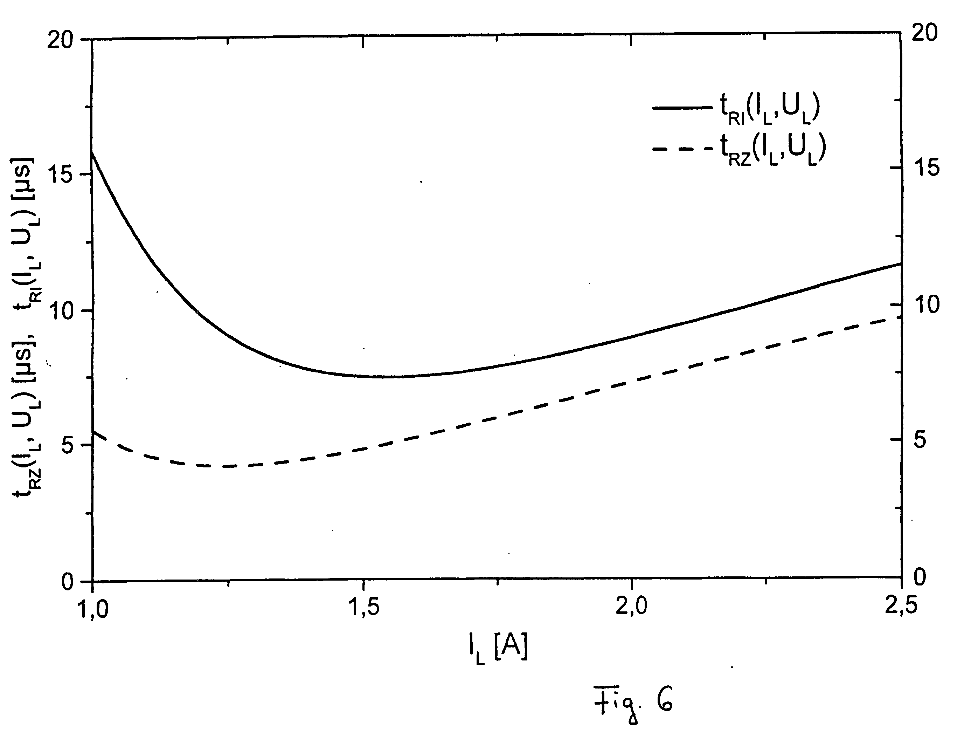

Figur 6 zeigt eine graphische Darstellung für eine empirisch ermittelte Abhängigkeit einer optimalen Verweilzeit tRZ und eines optimalen Halbierungszeittakts tRI von einem Lampenstrom IL. Gestrichelt ist die Abhängigkeit der Verweilzeit tRZ vom Lampenstrom IL dargestellt. Durchgezogen ist die Abhängigkeit des Halbierungszeittakts tRZ vom Lampenstrom IL dargestellt. Veränderungen im Reaktanznetzwerk des Betriebsgeräts führen zu anderen Abhängigkeiten. In der Figur 6 sind die Verweilzeit tRZ und der Halbierungszeittakt tRI jeweils als Funktion vom Lampenstrom IL und von der Lampenspannung UL beschrieben. Damit wird dem Zusammenhang rechnung getragen, dass vordringlich die Leistung der Lampe geregelt wird. Über die Lampenleistung kann somit der Lampenstrom IL in die Lampenspannung UL umgerechnet werden. Die in Figur 6 dargestellten Abhängigkeiten können in Form von Tabellen oder in Form einer mathematischen Approximation im Microcontroller abgelegt werden. Das Betriebsgerät optimiert sich damit selbsttätig auf Betriebsgrößen wie Lampenstrom IL oder Lampenspannung UL.

**Patentansprüche**

1.  Betriebsgerät zum Betrieb von Hochdruck-Entladungslampen mit folgenden Merkmalen:

    •   eine getaktete Stromversorgung (L2, C2, T1, D1, 1), die einen Betriebsstrom für eine Hochdruck-Entladungslampe (Lp) bereitstellt,

    •   ein Umpolnetzwerk (2), über das die Hochdruck-Entladungslampe (Lp) mit der getakteten Stromversorgung gekoppelt werden kann, mit einem Umpolsignaleingang, an dem ein Umpolsignal eingespeist wird (10), das ein Umpolen der Betriebsspannung der Hochdruck-Entladungslampe (Lp) steuert,

    •   eine Steuereinrichtung (4), die das Umpolsignal bereitstellt,

    •   einen Stelleingang für die getaktete Stromversorgung (L2, C2, T1, D1, 1), an dem eine Stellgröße eingespeist wird, mit Hilfe derer die von der getakteten Stromversorgung (L2, C2, T1, D1, 1) bereitgestellte Leistung variiert werden kann,

    •   eine Messeinrichtung (R1) zum Bereitstellen einer Regelgröße, die ein Maß für den Strom ist, die die getaktete Stromversorgung (L2, C2, T1, D1, 1) abgibt,

- eine Einrichtung (5) zum Bereitstellen einer Sollgröße, die ein Maß für einen Stromsollwert ist,

- eine Regeleinrichtung (6, 8), in die die Sollgröße und die Regelgröße eingespeist wird und abhängig von der Differenz von Soll- und Regelgröße die Stellgröße ausgibt,

**dadurch gekennzeichnet, dass** die Steuereinrichtung (4) Mittel enthält, die einen Absenkwert bereit stellen, um den die Sollgröße oder die Stellgröße synchron zum Umpolsignal während einer Absenkung abgesenkt wird.

2. Betriebsgerät gemäß Anspruch 1, **dadurch gekennzeichnet, dass** die Absenkung mindestens 1 Mikrosekunde vor dem Umpolen einsetzt.

3. Betriebsgerät gemäß Anspruch 1, **dadurch gekennzeichnet, dass** die Absenkung bis mindestens 10 Mikrosekunden nach dem Umpolen andauert.

4. Betriebsgerät gemäß Anspruch 1, **dadurch gekennzeichnet, dass** der zeitliche Verlauf des Absenkwerts pulsförmig ist wobei die Fallzeit des Pulses mindestens den dreifachen Wert aufweist wie die Anstiegszeit des Pulses.

5. Betriebsgerät gemäß Anspruch 1, **dadurch gekennzeichnet, dass** der Absenkwerts einen Maximalwert aufweist, der abhängig von einer Lampenbetriebsgröße gewählt wird.

6. Betriebsgerät gemäß Anspruch 1, **dadurch gekennzeichnet, dass** die Absenkung für eine Verweilzeit (tRZ) konstant ihren Maximalwert hält.

7. Betriebsgerät gemäß Anspruch 1, **dadurch gekennzeichnet, dass** ein Minimalwert auf den die Sollgröße oder die Stellgröße während einer Absenkung reduziert wird, bei jeder Absenkung gleich ist.

8. Betriebsgerät gemäß Anspruch 1, **dadurch gekennzeichnet, dass** der zeitliche Verlauf des Absenkwerts im wesentlichen folgender Gesetzmäßigkeit folgt:

$$\text{Absenkwert } (t) = \sigma(t)Ae^{-t/\tau}$$

wobei $\sigma(t)$ die Einheitssprungfunktion beschreibt, A einen Maximalwert der Absenkung vorgibt und $\tau$ das Verhältnis von äquivalenter Lastinduktivität zu äquivalentem Lastwiderstand angibt.

9. Betriebsgerät gemäß Anspruch 1, **dadurch gekennzeichnet, dass** es sich bei der getakteten Stromversorgung (L2, C2, T1, D1, 1) um einen Tiefsetzer handelt.

10. Betriebsgerät gemäß Anspruch 1, **dadurch gekennzeichnet, dass** es sich bei der getakteten Stromversorgung (L2, C2, T1, D1, 1) um einen Tiefsetzer mit Average-Current-Mode-Control handelt.

11. Betriebsgerät gemäß Anspruch 1, **dadurch gekennzeichnet, dass** die Regeleinrichtung (4, 5, 6) und die Steuereinrichtung durch einen Microcontroller realisiert werden.

12. Betriebsgerät gemäß Anspruch 1, **dadurch gekennzeichnet, dass** Steuereinrichtung (4) die Absenkung in einem Schritt auf einen Maximalwert einstellt und in mindesten 3 Schritten in einem gleichmäßigen Halbierungszeittakt (tRI) halbiert.

13. Verfahren zur Regelung einer Hochdruck-Entladungslampe (Lp), die in regelmäßigen Abständen umgepolt wird und durch Vorgabe eines Sollwerts für einen Betriebsparameter mittels eines Stellwerts geregelt wird, **gekennzeichnet durch** folgende Verfahrensschritte:

- vor dem Umpolen der Hochdruck-Entladungslampe (Lp), Absenken des Sollwerts oder des Stellwerts um einen Absenkwert, der einem Maximalwert der Absenkung entspricht,

- Abwarten einer Verweilzeit (tRZ),

- Umpolen der Hochdruck-Entladungslampe (Lp),

- Mindestens dreimalige Halbierung des Absenkwerts in zeitlich regelmäßig (tRI) aufeinanderfolgenden Schritten ,

- Einstellen des ursprünglich vorgegebenen Sollwerts.

14. Verfahren gemäß Anspruch 13, **dadurch gekennzeichnet, dass** das Umpolen während der Verweilzeit (tRZ) vorgenommen wird.

**Claims**

1. Operating appliance for operation of high-pressure discharge lamps having the following features:

- a pulsed power supply (L2, C2, T1, D1, 1), which provides an operating current for a high-pressure discharge lamp (Lp),

- a polarity reversal network (2) via which the high-pressure discharge lamp (Lp) can be coupled to the pulsed power supply, having a polarity reversal signal input at which a polarity reversal signal is fed in (10), which controls polarity reversal of the operating voltage for the high-pressure discharge lamp (Lp),
- a control device (4) which provides the polarity reversal signal,
- a control input for the pulsed power supply (L2, C2, T1, D1, 1), at which a manipulated variable is fed in, with the aid of which the power which is provided by the pulsed power supply (L2, C2, T1, D1, 1) can be varied,
- a measurement device (R1) for providing a control variable, which is a measure of the current which the pulsed power supply (L2, C2, T1, D1, 1) emits,
- a device (5) for providing a set variable which is a measure of a current set value,
- a regulating device (6, 8) into which the set variable and the control variable are fed and which emits the manipulated variable as a function of the difference between the set variable and the control variable,

**characterized in that** the control device (4) contains means which provide a reduction value by which the set variable or the manipulated variable is reduced in synchronism with the polarity reversal signal during a reduction.

2. Operating appliance according to Claim 1, **characterized in that** the reduction starts at least 1 microsecond before the polarity reversal.

3. Operating appliance according to Claim 1, **characterized in that** the reduction lasts for at least 10 microseconds after the polarity reversal.

4. Operating appliance according to Claim 1, **characterized in that** the time profile of the reduction value is pulsed, with the fall time of the pulse lasting for at least three times as long as the rise time of the pulse.

5. Operating appliance according to Claim 1, **characterized in that** the reduction value has a maximum value which is chosen as a function of a lamp operating variable.

6. Operating appliance according to Claim 1, **characterized in that** the reduction keeps its maximum value constant for a dwell time (tRZ).

7. Operating appliance according to Claim 1, **characterized in that** a minimum value to which the set variable or the manipulated variable is reduced during a reduction is the same for each reduction.

8. Operating appliance according to Claim 1, **characterized in that** the time profile of the reduction value essentially follows the following law:

$$reduction\ value\ (t) = \sigma(t)Ae^{-t/\tau}$$

where $\sigma(t)$ describes the unit step function, A indicates a maximum value of the reduction, and $\tau$ indicates the ratio of the equivalent load inductance to the equivalent load resistance.

9. Operating appliance according to Claim 1, **characterized in that** the pulsed power supply (L2, C2, T1, D1, 1) is a step-down converter.

10. Operating appliance according to Claim 1, **characterized in that** the pulsed power supply (L2, C2, T1, D1, 1) is a step-down converter with average current mode control.

11. Operating appliance according to Claim 1, **characterized in that** the regulating device (4, 5, 6) and the control device are formed by a microcontroller.

12. Operating appliance according to Claim 1, **characterized in that** the control device (4) sets the reduction to a maximum value in one step and halves it in at least three steps using a uniform halving clock cycle (tRI).

13. Method for controlling a high-pressure discharge lamp (Lp), whose polarity is reversed at regular intervals and is regulated by presetting a set value for one operating parameter by means of a manipulated variable value, **characterized by** the following method steps:

- before the polarity reversal of the high-pressure discharge lamp (Lp), reduction in the set value or in the manipulated variable value by a reduction value which corresponds to the maximum value of the reduction,
- waiting for a dwell time (tRZ),
- polarity reversal of the high-pressure discharge lamp (Lp),
- halving of the reduction value at least three times in regular (tRI) successive time steps,
- setting of the originally predetermined set value.

14. Method according to Claim 13, **characterized in that** the polarity reversal process is carried out during the dwell time (tRZ).

## Revendications

1. Appareil pour faire fonctionner des lampes à décharge à haute pression, comprenant les caractéristiques suivantes :

   • une alimentation (L2, C2, T1, D1, 1) en courant cadencée, qui procure un courant pour faire fonctionner une lampe (Lp) à décharge à haute pression,
   • un réseau (2) d'inversion de polarité, par lequel la lampe (Lp) à décharge à haute pression peut être couplée à l'alimentation de courant cadencée et comprenant une entrée de signal d'inversion de polarité à laquelle est envoyé (10) un signal d'inversion de polarité qui commande une inversion de polarité de la tension pour faire fonctionner la lampe (Lp) à décharge à haute pression,
   • un dispositif (4) de commande, qui procure le signal d'inversion de polarité,
   • une entrée de réglage de l'alimentation (L2, C2, T1, D1, 1) en courant cadencée, à laquelle est envoyée une grandeur de réglage à l'aide de laquelle la puissance procurée par l'alimentation (L2, C2, T1, D1, 1) en courant cadencée peut être modifiée,
   • un dispositif (R1) de mesure pour procurer une grandeur de régulation qui est une mesure du courant que l'alimentation (L2, C2, T1, D1, 1) en courant cadencée donne,
   • un dispositif (5) pour procurer une grandeur de consigne qui est une mesure d'une valeur de consigne du courant,
   • un dispositif (6, 8) de régulation, auquel la valeur de consigne et la grandeur de régulation sont envoyées et qui émet la grandeur de régulation en fonction de la différence entre la grandeur de consigne et la grandeur de régulation,

   **caractérisé en ce que** le dispositif (4) de commande comporte des moyens qui procurent une valeur d'abaissement, de laquelle la grandeur de consigne ou la grandeur de régulation est abaissée, en synchronisme avec le signal d'inversion de polarité pendant un abaissement.

2. Appareil suivant la revendication 1, **caractérisé en ce que** l'abaissement s'établit au moins une microseconde avant l'inversion de polarité.

3. Appareil suivant la revendication 1, **caractérisé en ce que** l'abaissement dure au moins jusqu'à 10 microsecondes après l'inversion de polarité.

4. Appareil suivant la revendication 1, **caractérisé en ce que** la variation dans le temps de la valeur d'abaissement est pulsée, la durée de descente de l'impulsion représentant au moins le triple de la durée de montée de l'impulsion.

5. Appareil suivant la revendication 1, **caractérisé en ce que** la valeur d'abaissement a un maximum qui est choisi en fonction d'une dimension de fonctionnement de la lampe.

6. Appareil suivant la revendication 1, **caractérisé en ce que** l'avancement maintient constante sa valeur maximum pendant une durée (tRZ) de maintien.

7. Appareil suivant la revendication 1, **caractérisé en ce qu'**une valeur minimum à laquelle la grandeur de consigne ou la grandeur de régulation est réduite pendant un abaissement est la même pour chaque abaissement.

8. Appareil suivant la revendication 1, **caractérisé en ce que** la variation dans le temps de la valeur d'abaissement suit sensiblement la loi suivante :

$$\text{valeur d'abaissement (t)} = \sigma(t)Ae^{-t/\tau}$$

   dans laquelle $\sigma(t)$ décrit la fonction de saut unitaire, A prescrit une valeur maximum de l'abaissement et $\tau$ donne le rapport de l'inductance de charge équivalente à la résistance de charge équivalente.

9. Appareil suivant la revendication 1, **caractérisé en ce que** l'alimentation (L2, C2, T1, D1, 1) en courant cadencée est un dévolteur.

10. Appareil suivant la revendication 1, **caractérisé en ce que** l'alimentation (L2, C2, T1, D1, 1) en courant cadencée est un dévolteur à commande en mode de courant moyen.

11. Appareil suivant la revendication 1, **caractérisé en ce que** le dispositif (4, 5, 6) de régulation et le dispositif de commande sont réalisés par un microcontrôleur.

12. Appareil suivant la revendication 1, **caractérisé en ce que** le dispositif (4) de commande règle l'abaissement en un pas jusqu'à une valeur maximum et divise par deux en au moins 3 pas dans une cadence (tRI) de temps de division par deux uniforme.

13. Procédé de régulation d'une lampe (Lp) à décharge à haute pression dont la polarité est inversée à des intervalles de temps réguliers et qui est régulée au moyen d'une valeur de régulation par prescription d'une valeur de consigne d'un paramètre de fonctionnement, **caractérisé par** les stades de procédé suivants :

- avant l'inversion de polarité de la lampe (Lp) à décharge à haute pression, on abaisse la valeur de consigne ou la valeur de réglage d'une valeur d'abaissement qui correspond à une valeur maximum de l'abaissement,
- on attend pendant une durée (tRZ) de maintien,
- on inverse la polarité de la lampe (Lp) à décharge à haute pression,
- on divise par deux au moins trois fois la valeur d'abaissement dans des stades qui se succèdent régulièrement (tRI) dans le temps,
- on établit la valeur de consigne prescrite à l'origine.

**14.** Procédé suivant la revendication 13, **caractérisé en ce que** l'on effectue le changement de polarité pendant le temps (tRZ) de maintien.

FIG. 1

FIG. 2

FIG. 3

11

FIG. 4

EP 1 326 483 B1

Fig. 5

Fig. 6